# FASCICULE DE BREVET EUROPEEN

(11) **EP 3 029 134 B1**
(45) Date de publication et mention de la délivrance du brevet: **09.08.2017**
(21) Numéro de dépôt: 15197621.4
(22) Date de dépôt: 02.12.2015
(51) Int. Cl.: C12G 1/028, F25B 30/02

(54) **SYSTEME DE REFROIDISSEMENT ET DE CHAUFFAGE POUR LA THERMOVINIFICATION**
KÜHL- UND HEIZSYSTEM FÜR DIE THERMOVINIFIKATION
COOLING AND HEATING SYSTEM FOR THERMOVINIFICATION

(30) Priorité: 02.12.2014 FR 1461783
(43) Date de publication de la demande: 08.06.2016
(73) Titulaire: Acel Energies, 81600 Sénouillac (FR)
(72) Inventeur: LACOMBE, Aristide, 81600 SENOUILLAC (FR)
(74) Mandataire: Cabinet Morelle & Bardou SC

(56) Documents cités:
- WO-A1-02/092754
- FR-A- 1 600 478
- FR-A1- 2 811 068
- FR-A1- 2 811 069
- FR-A1- 2 997 757
- FR-A2- 2 483 864
- US-A- 4 593 611

## Description

La présente invention concerne un système de refroidissement et chauffage pour la thermovinification.

Le domaine de la présente invention est donc celui de la vinification et concerne aussi bien la fabrication de vins rouges que de vins blancs et rosés. Lors de ces fabrications, il y a des étapes qui nécessitent un apport de chaleur tandis que d'autres étapes prévoient un refroidissement de la préparation qui va donner du vin.

La thermovinification est un procédé qui est de plus en plus utilisé, pour la vinification notamment des vins rouges mais aussi éventuellement des vins blancs ou rosés, et qui prévoit le chauffage d'une vendange ou de jus puis son refroidissement. De telles techniques sont par exemple la Macération Préfermentaire à Chaud (MPC) ou le cracking, et permettent de traiter de grandes quantités de raisins lors des vendanges et d'améliorer la qualité des vins en contrôlant mieux l'extraction au sein du moût de raisin obtenu après pressage de la vendange. La thermovinification permet notamment d'augmenter l'extraction des composés de la peau du raisin, de favoriser l'extraction de polyphénols et de détruire par ailleurs les arômes végétaux du raisin, les bactéries brettanomyces et les levures indigènes.

Le document FR-2 811 069 décrit un dispositif de refroidissement/réchauffage de moût au moyen d'une pompe à chaleur comprenant au moins deux échangeurs en mesure d'être traversés par le moût, un évaporateur/condenseur ainsi que des moyens de commutation entre les échangeurs et l'évaporateur/condenseur.

Le document FR-2 997 757 propose un système thermodynamique pour une thermovinification pour permettre d'un côté le refroidissement d'une première composition obtenue à partir de raisins et d'un autre côté le réchauffement d'une seconde composition obtenue à partir de raisins, ledit système comportant un premier échangeur permettant de refroidir la première composition et un second échangeur permettant de réchauffer la seconde composition. Ce système comporte en outre un premier circuit de fluide frigorigène comportant un détendeur et un compresseur et alimentant le premier échangeur, un second circuit de fluide frigorigène distinct du premier circuit comportant un détendeur et un compresseur et alimentant le second échangeur, et un troisième échangeur thermique entre le premier circuit et le second circuit.

La présente invention a pour but d'améliorer de tels dispositifs et de proposer un système permettant de limiter la consommation énergétique lors de la fabrication de vins. Un autre but est de proposer des moyens permettant de réaliser une pasteurisation éco-énergétique qui nécessite simultanément un chauffage et un refroidissement.

Un autre but de la présente invention est aussi d'optimiser les flux énergétiques de manière par exemple à pouvoir récupérer des calories lors d'un refroidissement pour s'en servir dans une étape de chauffage.

Avantageusement, le système selon l'invention sera facile à mettre en oeuvre, et sera de préférence suffisamment compact pour pouvoir être mobile, par exemple déplaçable sur un chariot.

À cet effet, la présente invention propose un système de refroidissement et de chauffage pour une thermovinification pour permettre d'un côté le refroidissement d'une première composition obtenue à partir de raisins et d'un autre côté le réchauffement d'une seconde composition obtenue à partir de raisins, ledit système comportant un premier échangeur permettant de refroidir la première composition et un second échangeur permettant de réchauffer la seconde composition.

Selon l'invention, ce système comporte en outre :
- un circuit de fluide frigorigène comportant un compresseur, un évaporateur, un détendeur et un condenseur,
- un premier circuit de fluide caloporteur alimentant le premier échangeur à partir de l'évaporateur, et
- un second circuit de fluide caloporteur alimentant le second échangeur à partir du condenseur.

Un tel circuit est très simple et d'une grande efficacité. Il est particulièrement bien adapté pour des applications vinicoles. On a ici deux circuits avec un fluide caloporteur, liquide, qui ne change pas de phase et un autre circuit pour la production à la fois de froid et de chaud qui contient un fluide qui change de phase pour passer de l'état liquide à l'état gazeux et inversement. Les éléments du circuit de fluide frigorigène sont les éléments classiques d'une machine thermodynamique. Ce circuit peut comporter par exemple plusieurs compresseurs, en série ou en parallèle, Leur fonction est de comprimer le fluide frigorigène. L'évaporateur a pour but d'absorber des calories du premier circuit de fluide caloporteur, le détendeur correspond à des moyens permettant de détendre le fluide frigorigène et le condenseur a pour but de fournir des calories au deuxième circuit de fluide caloporteur. Ces divers éléments peuvent parfois porter d'autres dénominations. La structure telle que proposée permet de récupérer les calories sur le circuit froid (le premier) pour les transférer au circuit chaud (le deuxième).

Le fluide frigorigène utilisé dans le circuit de fluide frigorigène est de préférence du gaz carbonique. Dans ce cas, le circuit de fluide frigorigène pourra présenter, au sein du condenseur, qui est alors couramment appelé aussi "gaz cooler" (ou refroidisseur de gaz), un état dit "transcritique". D'autres fluides tels de l'ammoniac, des fluides frigorigènes de type HFO (par exemple du 1234ze) ou de type HFC (par exemple du R134a), de l'iso-butane, etc. peuvent également être envisagés.

Le compresseur du circuit de fluide frigorigène permet d'obtenir de préférence une pression supérieure à 100 bars, de manière encore préférée supérieure à 140 bars de manière à obtenir un bon rendement au niveau du circuit à fluide frigorigène.

Le circuit de fluide frigorigène permet avantageusement de fournir du fluide caloporteur en sortie du condenseur supérieure à 70 °C, de préférence à environ 90 °C.

Le fluide caloporteur dans le premier circuit et/ou dans le second circuit est par exemple choisi dans l'ensemble des fluides contenant l'eau, l'eau glycolée, l'alcali, le glycol et le gaz carbonique (CO₂).

Pour augmenter le rendement du système, le second circuit de fluide caloporteur comporte avantageusement un aérorefroidisseur entre le second échangeur et le condenseur du circuit de fluide frigorigène. Une vanne de bifurcation commandée par un régulateur peut alors être avantageusement prévue en amont de l'aérorefroidisseur.

Pour augmenter le rendement du système on peut aussi prévoir sur le premier circuit de fluide caloporteur la présence d'un aérorefroidisseur entre le premier échangeur et l'évaporateur du circuit de fluide frigorigène. Une vanne de bifurcation commandée par un régulateur est alors avantageusement prévue en amont de l'aérorefroidisseur.

Plus généralement, il est possible d'avoir un système de refroidissement complémentaire, qui peut se présenter sous la forme d'un aérorefroidisseur, sur le premier circuit et/ou sur le deuxième circuit.

Un système de refroidissement et de chauffage tel que décrit ci-dessus est particulièrement bien adapté aussi pour fonctionner en combinaison avec un système connu sous le nom de "flash-détente". Dans cette variante, le dispositif décrit plus haut comporte alors en outre un dispositif permettant de mettre sous vide une composition obtenue à base de raisins pour provoquer une vaporisation partielle de ladite composition ; ledit dispositif de mise sous vide est alimenté par le deuxième échangeur ; le système comporte en outre un condenseur pour la condensation des vapeurs obtenues par vaporisation, ledit condenseur étant relié au premier circuit de fluide caloporteur.

Selon une variante de réalisation, un système de refroidissement et de chauffage tel que décrit ci-dessus peut également comporter un circuit de fluide frigorigène monté en parallèle de l'évaporateur et comportant un troisième échangeur et/ou un aéroévaporateur.

De même, un système de refroidissement et de chauffage tel que décrit ci-dessus peut comporter en outre un circuit de fluide frigorigène monté en parallèle du condenseur et comportant un quatrième échangeur et/ou un aérocondenseur.

Des détails et avantages de la présente invention apparaitront mieux de la description qui suit, faite en référence au dessin schématique annexé sur lequel :
La figure 1 est une vue schématique de principe d'un exemple de réalisation d'un système de refroidissement et chauffage selon la présente invention,
La figure 2 est un schéma de principe simplifié du système illustré à la figure 1,
La figure 3 est une variante de réalisation d'un système de refroidissement et chauffage tel celui de la figure 1, et
La figure 4 est une autre variante de réalisation du système illustré à partir du schéma de la figure 2.

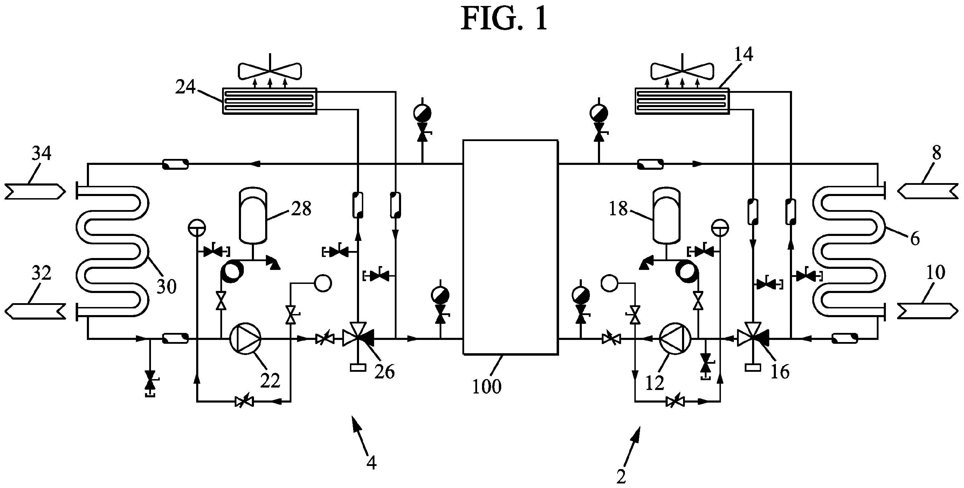

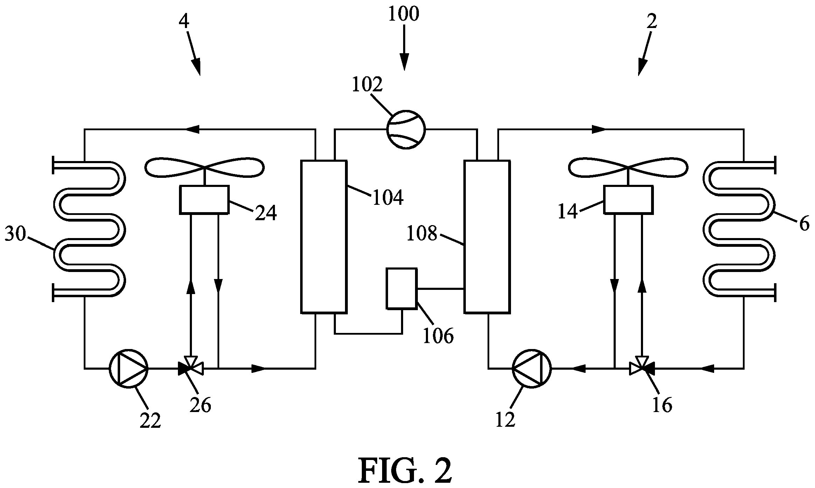

La figure 1 illustre un système thermodynamique, permettant d'une part de refroidir et d'autre part de chauffer. Ce système comporte un premier circuit 2 et un deuxième circuit 4, chaque circuit correspondant à la circulation d'un fluide caloporteur. Les deux circuits sont ici indépendants et le fluide caloporteur du premier circuit 2 ne se mélange pas au fluide caloporteur du second circuit 4, ni l'inverse. Entre les deux circuits, se trouve une pompe à chaleur 100, appelée aussi thermo-frigo pompe, illustrée plus en détail sur la figure 2.

Le fluide utilisé dans le premier circuit 2 est de préférence le même que celui utilisé dans le deuxième circuit 4 mais il peut s'agir de fluides caloporteurs différents. À titre d'exemple, le fluide caloporteur choisi est de l'eau, ou bien de l'eau glycolée, ou de l'alcali ou bien encore du gaz carbonique liquide. Il n'est pas prévu que ce fluide change d'état. Il reste ainsi de préférence toujours à l'état liquide.

Le premier circuit 2 comporte un premier échangeur 6 utilisé pour refroidir un mélange à base de raisins rentrant par une première entrée 8 et sortant refroidi par une première sortie 10. Le mélange est par exemple du raisin vendangé éventuellement égrappé et/ou simplement pressé et alimenté dans le premier échangeur par une pompe non illustrée.

Le fluide caloporteur est entrainé dans le premier circuit par une première pompe 12. Le premier circuit 2 comporte en outre (liste non exhaustive) un aérorefroidisseur 14, une première vanne de bifurcation 16 et un vase d'expansion 18.

Dans le premier circuit 2, la première pompe 12 vient injecter du fluide caloporteur dans la pompe à chaleur 100. Ce fluide en ressort refroidi et est dirigé alors vers le premier échangeur 6 où il vient refroidir la composition à base de raisins qui y circule. Après le premier échangeur 6, en fonction de la température du fluide caloporteur, ce dernier est soit renvoyé directement vers la première pompe 12 soit dirigé vers le premier aérorefroidisseur 14. La première vanne de bifurcation 16 est par exemple commandée par un régulateur électronique. Elle permet de doser la quantité de fluide caloporteur qui doit être refroidie avant de retourner dans la pompe à chaleur 100 en passant par la première pompe 12.

Le premier échangeur 6 peut prendre différentes formes. Il peut s'agir d'un échangeur tubulaire mais il peut aussi par exemple s'agir d'une cuve présentant une double enveloppe ou bien encore d'un réacteur avec des ceintures de refroidissement, par exemple avec de l'eau glacée ou bien du fluide frigorigène. Cette cuve ou ce réacteur sont avantageusement munis de moyens permettant d'homogénéiser leur contenu, par exemple un système de remontage des jus de fond de cuve ou bien un système d'injection de gaz.

Le deuxième circuit 4 est, dans cette forme de réalisation, sensiblement similaire au premier circuit 2. On y retrouve en effet une deuxième pompe 22, un second aérorefroidisseur 24, une seconde vanne de bifurcation 26 et un second vase d'expansion 28.

Ce deuxième circuit 4 est un circuit destiné à venir chauffer une composition à base de raisins, par exemple du moût d'une cuve de macération, à travers un second échangeur 30. Ce dernier peut prendre différentes formes et se présenter sous la forme d'un échangeur classique ou bien être intégré à une cuve, par exemple une cuve double enveloppe ou un réacteur de chauffage avec des ceintures de circulation, par exemple avec de l'eau ou bien un fluide frigorigène. Ici aussi, on prévoit avantageusement des moyens pour homogénéiser la composition réchauffée.

La composition à base de raisins rentre dans le second échangeur 30 par une seconde entrée 34 et en ressort réchauffée par une seconde sortie 32. La deuxième pompe 22 vient injecter du fluide caloporteur dans la pompe à chaleur 100. Ce fluide en ressort réchauffé et est dirigé alors vers le second échangeur 30 où il vient chauffer la composition à base de raisins qui y circule. Pour éviter d'injecter du fluide trop chaud dans la pompe à chaleur 100, en fonction de la température du fluide caloporteur en sortie de la deuxième pompe 22, le fluide est soit renvoyé directement vers la deuxième pompe 22 soit dirigé vers le second aérorefroidisseur 24. La seconde vanne de bifurcation 26 est par exemple commandée par un régulateur électronique. Elle permet de doser la quantité de fluide caloporteur qui doit être refroidie avant de retourner dans la pompe à chaleur 100 en sortie de la deuxième pompe 22.

La figure 2 illustre très schématiquement la pompe à chaleur 100 qui comporte une troisième pompe 102, ou compresseur, un condenseur 104, un détendeur 106 et un évaporateur 108. Ces éléments sont reliés dans la pompe à chaleur 100 pour former un circuit dans lequel circule un fluide frigorigène. Ce fluide est de préférence du gaz carbonique (CO₂) mais il peut aussi s'agir également par exemple d'un hydro-fluoro-oléfines (HFO) comme un HFO1234 tel le HFO 1234ze qui est un hydrofluoropropène ou bien encore un hydro-fluoro-carbure tel par exemple le HFC134a qui est un dérivé de l'éthane. La troisième pompe 102 permet de mettre le gaz carbonique à très haute pression, par exemple aux environs de 150 bars. Pour atteindre de telles pressions, on peut envisager de mettre deux pompes en série. Il est aussi envisageable d'avoir des pompes en parallèle, pour avoir par exemple deux régimes de fonctionnement.

De manière classique, le fluide frigorigène à haute pression passe dans le condenseur 104, appelé plus couramment "gaz cooler" ou refroidisseur de gaz, dans un cycle thermodynamique avec du gaz carbonique, dans lequel il libère des calories qui sont transmises au fluide caloporteur du deuxième circuit 4, puis est détendu dans le détendeur 106 avant de passer dans l'évaporateur 108 où il vient absorber des calories présentes dans le fluide caloporteur du premier circuit 2 avant de retourner à la troisième pompe 102.

La pompe à chaleur 100 est dimensionnée de telle sorte que lors du fonctionnement du système, de l'eau -ou eau glycolée- soit produite en sortie de condenseur 104 à environ 90 °C. Cette eau chaude vient alors réchauffer la composition circulant dans le second échangeur 30. En sortie d'échangeur, l'eau revient vers la deuxième pompe 22. Si la température de l'eau est trop élevée en sortie de pompe, un système de commande et de gestion gérant l'ensemble du système présenté ici, à l'aide de capteurs et/ou sondes répartis dans les divers circuits et dispositifs, vient faire passer tout ou partie de l'eau pompée dans le second aérorefroidisseur 24. Le but de ce refroidissement est de maintenir une température aussi basse que possible à l'entrée du condenseur 104 pour optimiser le refroidissement du fluide frigorigène (CO₂) qui cédera ses calories sensibles et latentes à l'eau de chauffage. Ceci permet d'augmenter le rendement du dispositif.

Du côté du premier circuit 2, qui forme une boucle que l'on peut appeler boucle froide, une régulation de la température du fluide caloporteur est également réalisée. Le système de commande et de gestion peut, par action sur la première vanne de bifurcation 16, pré-refroidir si nécessaire l'eau sortant du premier échangeur 6 (dans lequel elle a été réchauffée). Les calories "excédentaires" sont alors rejetées à l'air extérieur. De la sorte, il est possible de maintenir une température relativement basse à l'entrée de l'évaporateur 108. La puissance "froid" à fournir est ainsi limitée et le rendement de l'ensemble amélioré.

En outre, s'il n'y a par exemple qu'un besoin en chauffage dans le deuxième circuit 4, alors la mise en route du premier aérorefroidisseur 14 (qui, tout comme le second aérorefroidisseur 24 pourrait être remplacé par un autre type de refroidisseur) permet de créer un besoin de refroidissement pour récupérer les calories de l'air extérieur et permet ainsi une production calorique uniquement. Inversement, si seul un besoin de refroidissement existe, la mise en route du second aérorefroidisseur 24 permet de répondre à ce besoin en évacuant les calories extraites par le premier circuit 2.

Le second aérorefroidisseur 24 participe au bon fonctionnement de la pompe à chaleur 100. Le refroidissement du gaz carbonique en phase transcritique, et donc le réchauffage de l'eau caloportrice, nécessite une température d'entrée dans le condenseur 104 la moins chaude possible.

Ainsi si le système décrit ci-dessus vient prendre place dans un chai, on peut refroidir du jus de raisin dans le premier échangeur 6 ou bien assurer une thermorégulation de cuves de vinification pour la fermentation alcoolique des vins blancs (ou rosés). Ce premier échangeur 6 peut aussi éventuellement servir à la production d'eau glacée qui est alors stockée pour être utilisée ultérieurement pour réaliser un refroidissement. Si la demande frigorifique en production d'eau glacée pour le chai ou bien pour le refroidissement de la vendange en post macération est trop faible, alors le premier aéroérefroidisseur 14 peut être utilisé pour assurer un complément. La mise en route de cet aéroévaporateur peut être commandée par le système de gestion et de commande (non représenté) en fonction par exemple de la température du fluide entrant au niveau de la première entrée 8 dans le premier échangeur 6.

Le système thermodynamique proposé ici présente un rendement global bien supérieur aux systèmes traditionnels qui consistent à générer de l'eau chaude avec une chaudière et de faire circuler cette eau dans un échangeur tubulaire pour chauffer la vendange et à générer de l'eau froide par une tour aéroréfrigérante ou un groupe frigorifique.

Le système proposé présente un autre avantage. Les échangeurs, pour des performances équivalentes, sont de taille sensiblement plus réduite que celle des échangeurs utilisés couramment. Il est ainsi possible de réaliser un système assez compact pour pouvoir prendre place sur un chariot. Le système peut alors être déplacé dans un chai et ainsi être utilisé successivement pour plusieurs cuves.

Un autre avantage par rapport aux systèmes traditionnels est l'entretien réduit du matériel. Il est presque inexistant et en tout cas bien moindre que l'entretien d'une chaudière et d'un système de tour aéroréfrigérante.

Le système proposé fonctionne de préférence entièrement à l'électricité. Ainsi, il n'y a pas de problème de stockage de combustible.

Le prix de revient, les coûts d'exploitation et l'impact sur l'environnement d'un système selon la présente invention sont globalement très avantageux. En effet, un tel système permet de récupérer de l'énergie dégagée par la fermentation alcoolique du vin, de l'énergie présente dans l'air extérieur et de l'énergie récupérée par le refroidissement des thermovinifications. Le système est en partie autoalimenté énergétiquement car il permet de recycler un déchet calorifique.

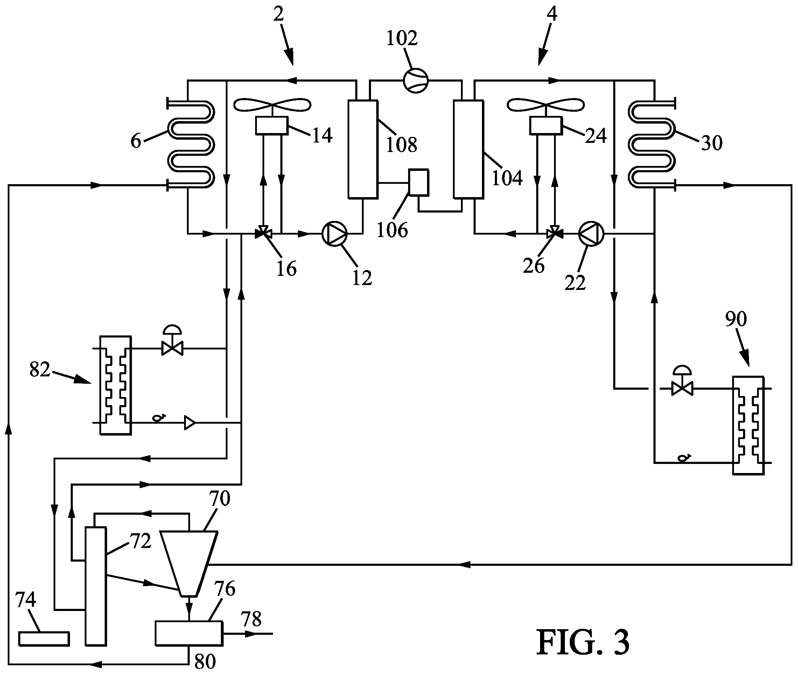

Comme l'illustre la figure 3 un système selon la présente invention est particulièrement bien adapté pour gérer les besoins simultanés en froid et en chaud qui existent dans un dispositif de "flash-détente" utilisé pour la thermovinification. Dans ce cas, on peut notamment récupérer les calories générées par la condensation des vapeurs de "flash-détente".

Sur cette figure 3, on a représenté une enceinte 70 au sein de laquelle il est prévu de mettre des raisins sous vide.

On prévoit par exemple d'introduire les raisins fraichement vendangés dans l'entrée du deuxième échangeur 30 afin de les réchauffer. En sortie de cet échangeur, les raisins sont conduits à l'enceinte 70 et au moins partiellement vaporisés. Les vapeurs de raisins sont ensuite condensées au sein d'un condenseur 72. Dans la forme de réalisation représentée, il est prévu ici de refroidir le condenseur 72 à partir du premier circuit 2. Une pompe à vide 74 est prévue pour maintenir une faible pression dans le condenseur 72 et dans l'enceinte 70. Cette pompe à vide 74 agit ainsi également comme pompe pour la circulation des vapeurs issues de la vendange.

Le jus sortant du condenseur 72 et aussi celui sortant directement de l'enceinte 70 où tout le jus n'est pas entièrement vaporisé ainsi que les rafles, peaux et autres sont ensuite collectés dans un dispositif d'égouttage et de pressurage 76. Les déchets solides sortent du dispositif d'égouttage et de pressurage 76 par une première sortie 78 tandis que le jus, liquide, sort par une seconde sortie 80 reliée à l'entrée 8 du premier échangeur 6. Le jus est ainsi encore refroidi avant d'être envoyé en cuve de fermentation (en aval de la première sortie 10 du premier échangeur 6).

Comme illustré sur la figure 3, il est possible de prévoir optionnellement une unité de production d'eau froide 82 sur le premier circuit et/ou une unité de production d'eau chaude 90 sur le deuxième circuit.

Enfin, un système selon l'invention permet de réaliser deux manipulations en une seule, le réchauffement d'une quantité de raisin étant réalisé simultanément au refroidissement d'une autre quantité de raisin.

Dans une variante de réalisation non illustrée, le système selon l'invention pourrait être également utilisé dans une application connue sous le nom de "thermo-détente". Dans cette variante, à la place du dispositif de flash-détente, un dispositif permettant de mettre sous pression une composition à base de raisins pour provoquer une déstructuration de la composition est mis en oeuvre. Ce dispositif est alors alimenté par le système décrit plus haut.

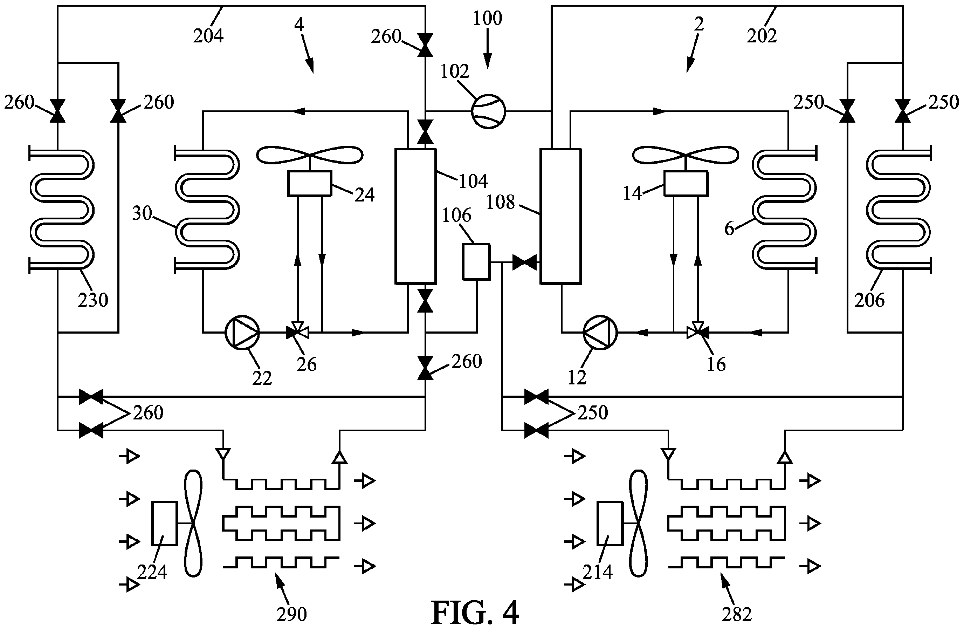

Dans une variante de la forme de réalisation des figures 1 et 2, il est proposé sur la figure 4 (établie à partir de la figure 2) d'utiliser le fluide frigorigène de la pompe à chaleur 100 non seulement dans le condenseur 104 et dans l'évaporateur 108 mais aussi pour alimenter un troisième échangeur 206 et/ou un quatrième échangeur 230.

Le fluide frigorigène peut alors alimenter un circuit 202 et/ou un autre circuit 204. Le circuit 202 forme une autre boucle "froide" comporte le troisième échangeur 206 qui permet de réaliser un refroidissement d'une composition à base de raisins. Contrairement au premier échangeur, la source de froid ici n'est pas de l'eau mais le fluide frigorigène directement. Dans ce circuit 202, il est aussi possible de prévoir, comme illustré sur la figure 4, un aéroévaporateur 282 qui peut être éventuellement couplée à un ventilateur 214. On prévoit à chaque fois sur le circuit 202 des dérivations pour permettre de choisir soit de refroidir de l'eau dans l'unité de production d'eau froide 282, soit de refroidir une composition à base de raisins dans le troisième échangeur 206. Des électrovannes 250 sont prévues à chaque fois pour orienter le fluide frigorigène. On remarque que si toutes les électrovannes 250 sont fermées, aucun fluide ne circule dans le circuit 202 et on retrouve exactement le fonctionnement du système des figures 1 et 2.

Le circuit 204 est similaire au circuit 202 mais forme une boucle chaude comportant le quatrième échangeur 230. Ce dernier permet de réaliser un réchauffage d'une composition à base de raisins. La source de chaleur ici est directement le fluide frigorigène. Dans ce circuit 204, il est aussi possible de prévoir, comme illustré sur la figure 4, un aérocondenseur 290 qui peut être éventuellement couplée à un ventilateur 224. On prévoit à chaque fois sur le circuit 204 des dérivations pour permettre de choisir soit de produire de l'eau chaude dans l'unité de production d'eau chaude 290, soit de réchauffer une composition à base de raisins dans le quatrième échangeur 230. Des électrovannes 260 sont prévues à chaque fois pour orienter le fluide frigorigène. On remarque que si toutes les électrovannes 260 sont fermées, aucun fluide ne circule dans le circuit 204 et on retrouve exactement le fonctionnement du système des figures 1 et 2.

Sur les circuits 202 et 204, et plus généralement sur tout le système, il est avantageusement prévu d'avoir un régulateur électronique pour la commande de l'ouverture et de la fermeture des diverses électrovannes. Ce régulateur est prévu pour toute la régulation du système et commandera également divers paramètres tels par exemple la vitesse de rotation des compresseurs, refroidisseurs et autres.

Un système tel celui illustré sur la figure 4 permet une compatibilité complète dans un chai de vinification puisqu'il permet de réchauffer et/ou de refroidir des compositions à base de raisins mais aussi de produire tant de l'eau chaude que de l'eau glacée.

## Revendications

1. Système de refroidissement et de chauffage pour une thermovinification pour permettre d'un côté le refroidissement d'une première composition obtenue à partir de raisins et d'un autre côté le réchauffement d'une seconde composition obtenue à partir de raisins, ledit système comportant un premier échangeur (6) permettant de refroidir la première composition et un second échangeur (30) permettant de réchauffer la seconde composition,
**caractérisé en ce qu'**il comporte en outre :
- un circuit de fluide frigorigène (100) comportant un compresseur (102), un évaporateur (108), un détendeur (106) et un condenseur (104),
- un premier circuit (2) de fluide caloporteur alimentant le premier échangeur (6) à partir de l'évaporateur (108), et
- un second circuit (4) de fluide caloporteur alimentant le second échangeur (30) à partir du condenseur (104).

2. Système de refroidissement et de chauffage selon la revendication 1, **caractérisé en ce que** le fluide frigorigène utilisé dans le circuit de fluide frigorigène (100) est du gaz carbonique.

3. Système de refroidissement et de chauffage selon l'une des revendications 1 ou 2, **caractérisé en ce que** le compresseur (102) du circuit de fluide frigorigène permet d'obtenir une pression supérieur à 100 bars, de préférence supérieure à 140 bars.

4. Système de refroidissement et de chauffage selon l'une des revendications 1 à 3, **caractérisé en ce que** le circuit de fluide frigorigène (100) permet de fournir du fluide caloporteur en sortie du condenseur (104) supérieure à 70 °C, par exemple à environ 90 °C.

5. Système de refroidissement et de chauffage selon l'une des revendications 1 à 4, **caractérisé en ce que** le fluide caloporteur dans le premier circuit (2) et/ou dans le second circuit (4) est choisi dans l'ensemble des fluides contenant l'eau et l'eau glycolée.

6. Système de refroidissement et de chauffage selon l'une des revendications 1 à 5, **caractérisé en ce que** le second circuit (4) de fluide caloporteur comporte un aérorefroidisseur (24) entre le second échangeur (30) et le condenseur (104) du circuit de fluide frigorigène (100).

7. Système de refroidissement et de chauffage selon la revendication 6, **caractérisé en ce qu'**une vanne de bifurcation (26) est commandée par un régulateur en amont de l'aérorefroidisseur (24).

8. Système de refroidissement et de chauffage selon l'une des revendications 1 à 7, **caractérisé en ce que** le premier circuit (2) de fluide caloporteur comporte un aérorefroidisseur (14) entre le premier échangeur (6) et l'évaporateur (108) du circuit de fluide frigorigène (100).

9. Système de refroidissement et de chauffage selon la revendication 8, **caractérisé en ce qu'**une vanne de bifurcation (16) est commandée par un régulateur en amont de l'aérorefroidisseur (14).

10. Système de refroidissement et de chauffage selon l'une des revendications 1 à 9, **caractérisé en ce qu'**il comporte en outre un dispositif permettant de mettre sous vide une composition obtenue à base de raisins pour provoquer une vaporisation partielle de ladite composition, **en ce que** ledit dispositif de mise sous vide est alimenté par le deuxième échangeur (30), **en ce que** le système comporte en outre un condenseur (72) pour la condensation des vapeurs obtenues par vaporisation, ledit condenseur étant relié au premier circuit (2) de fluide caloporteur.

11. Système de refroidissement et de chauffage selon l'une des revendications 1 à 10, **caractérisé en ce qu'**il comporte en outre un circuit (202) de fluide frigorigène monté en parallèle de l'évaporateur (108) et comportant un troisième échangeur (206) et/ou un aéroévaporateur (282).

12. Système de refroidissement et de chauffage selon l'une des revendications 1 à 11, **caractérisé en ce qu'**il comporte en outre un circuit (204) de fluide frigorigène monté en parallèle du condenseur (104) et comportant un quatrième échangeur (230) et/ou un aérocondenseur (290).

## Patentansprüche

1. Kühl- und Heizsystem für eine Thermovinifikation zum Ermöglichen von einerseits dem Kühlen einer ersten aus Weintrauben erhaltenen Zusammensetzung und andererseits dem Erhitzen einer zweiten aus Weintrauben erhaltenen Zusammensetzung, wobei das System einen ersten Wärmetauscher (6), welcher Kühlen der ersten Zusammensetzung ermöglicht, und einen zweiten Wärmetauscher (30) aufweist, welcher Erhitzen der zweiten Zusammensetzung ermöglicht, **dadurch gekennzeichnet, dass** es zudem aufweist:
- einen Kältemittelfluidkreislauf (100), welcher einen Kompressor (102), einen Verdampfer (108), einen Druckminderer (106) und einen Kondensator (104) aufweist,
- einen ersten Wärmeträgerfluidkreislauf (2), welcher den ersten Wärmetauscher (6) ausgehend von dem Verdampfer (108) versorgt, und
- einen zweiten Wärmeträgerfluidkreislauf (4), welcher den zweiten Wärmetauscher (30) ausgehend von dem Kondensator (104) versorgt.

2. Kühl- und Heizsystem nach Anspruch 1,
**dadurch gekennzeichnet,**
**dass** das in dem Kältemittelfluidkreislauf (100) verwendete Kältemittelfluid Kohlendioxid ist.

3. Kühl- und Heizsystem nach Anspruch 1 oder 2,
**dadurch gekennzeichnet,**
**dass** der Kompressor (102) des Kältemittelfluidkreislaufs es ermöglicht, einen Druck von mehr als 100 bar, vorzugsweise von mehr als 140 bar, zu erreichen.

4. Kühl- und Heizsystem nach einem der Ansprüche 1 bis 3,
**dadurch gekennzeichnet,**
**dass** der Kältemittelfluidkreislauf (100) es ermöglicht, das Wärmeträgerfluid am Ausgang des Kondensators (104) mit mehr als 70 °C, zum Beispiel mit ungefähr 90 °C, bereitzustellen.

5. Kühl- und Heizsystem nach einem der Ansprüche 1 bis 4,
**dadurch gekennzeichnet,**
**dass** das Wärmeträgerfluid im ersten Kreislauf (2) und/oder im zweiten Kreislauf (4) aus der Gruppe der Fluide ausgewählt ist, welche Wasser und Sole enthält.

6. Kühl- und Heizsystem nach einem der Ansprüche 1 bis 5,
**dadurch gekennzeichnet,**
**dass** der zweite Wärmeträgerfluidkreislauf (4) einen Luftkühler (24) zwischen dem zweiten Wärmetauscher (30) und dem Kondensator (104) des Kältemittelfluidkreislaufs (100) aufweist.

7. Kühl- und Heizsystem nach Anspruch 6,
**dadurch gekennzeichnet,**
**dass** vorgelagert zum Luftkühler (24) ein Verzweigungsventil (26) von einem Regler betätigt wird.

8. Kühl- und Heizsystem nach einem der Ansprüche 1 bis 7,
**dadurch gekennzeichnet,**
**dass** der erste Wärmeträgerfluidkreislauf (2) einen Luftkühler (14) zwischen dem ersten Wärmetauscher (6) und dem Verdampfer (108) des Kältemittelfluidkreislaufs (100) aufweist.

9. Kühl- und Heizsystem nach Anspruch 8,
**dadurch gekennzeichnet,**
**dass** vorgelagert zum Luftkühler (14) ein Verzweigungsventil (16) von einem Regler betätigt wird.

10. Kühl- und Heizsystem nach einem der Ansprüche 1 bis 9,
**dadurch gekennzeichnet,**
**dass** es zudem eine Einrichtung aufweist, welche es ermöglicht, eine basierend auf Weintrauben erhaltene Zusammensetzung unter Vakuum zu setzen, um ein teilweises Verdampfen der Zusammensetzung zu bewirken,
**dass** die Einrichtung zum unter Vakuum Setzen durch den zweiten Wärmetauscher (30) versorgt wird,
**dass** das System zudem einen Kondensator (72) zur Kondensation von durch das Verdampfen erhaltener Dämpfe aufweist, wobei der Kondensator mit dem ersten Wärmeträgerfluidkreislauf (2) verbunden ist.

11. Kühl- und Heizsystem nach einem der Ansprüche 1 bis 10,
**dadurch gekennzeichnet,**
**dass** es zudem einen Kältemittelfluidkreislauf (202) aufweist, der parallel zum Verdampfer (108) montiert ist und einen dritten Wärmetaucher (206) und/oder einen Luftverdampfer (282) aufweist.

12. Kühl- und Heizsystem nach einem der Ansprüche 1 bis 11,
**dadurch gekennzeichnet,**
**dass** es zudem einen Kältemittelfluidkreislauf (204) aufweist, welcher parallel zum Kondensator (104) montiert ist und einen vierten Wärmetauscher (230) und/oder einen Luftkondensator (290) aufweist.

## Claims

1. Cooling and heating system for thermovinification, such as to allow on the one hand for the cooling of a first composition obtained from grapes, and, on the other, for the heating of a second composition obtained from grapes, said system comprising a first exchanger (6) allowing for the cooling of the first composition and a second exchanger (30) allowing for the heating of the second composition, **characterised in that** it further comprises:
- a refrigerant fluid circuit (100), comprising a compressor (102), an evaporator (108), a pressure regulator (106), and a condenser (104),
- a first circuit (2) of heat-exchanging fluid, feeding the first exchanger (6) from the evaporator (108), and
- a second circuit (4) of heat-exchanging fluid, feeding the second exchanger (30) from the condenser (104).

2. Cooling and heating system according to claim 1, **characterised in that** the refrigerant fluid used in the refrigerant fluid circuit (100) is carbonic gas.

3. Cooling and heating system according to claim 1 or 2, **characterised in that** the compressor (102) of the refrigerant fluid circuit allows for a pressure of greater than 100 bar to be obtained, for preference greater than 140 bar.

4. Cooling and heating system according to anyone of claims 1 to 3, **characterised in that** the refrigerant fluid circuit (100) allows for the supply of the heat-exchanging fluid deriving from the condenser (104) at a temperature greater than 70 °C, for example at about 90 °C.

5. Cooling and heating system according to anyone of claims 1 to 4, **characterised in that** the heat-exchanging fluid in the first circuit (2) and/or in the second circuit (4) is chosen from among the whole range of fluids containing water and glycol water.

6. Cooling and heating system according to anyone of claims 1 to 5, **characterised in that** the second circuit (4) of heat-exchanging fluid comprises a dry cooler (24) between the second exchanger (30) and the condenser (104) of the refrigerant fluid circuit (100).

7. Cooling and heating system according to claim 6, **characterised in that** a bifurcation valve (26) is controlled by a regulator upstream of the dry cooler (24).

8. Cooling and heating system according to anyone of claims 1 to 7, **characterised in that** the first circuit (2) of heat-exchanging fluid comprises a dry cooler (14) between the first exchanger (6) and the evaporator (108) of the refrigerant fluid circuit (100).

9. Cooling and heating system according to claim 8, **characterised in that** a bifurcation valve (16) is controlled by a regulator upstream of the dry cooler (14).

10. Cooling and heating system according to any one of claims 1 to 9, **characterised in that** it further comprises a device allowing for the imposition of vacuum on a composition obtained on the basis of grapes, such as to provoke a partial vaporisation of the said composition, **in that** the said device for imposing vacuum is fed by the second exchanger (30), **in that** the system further comprises a condenser (72) for condensing the vapours obtained by vaporisation, the said condenser being connected to the first circuit (2) of heat-exchanging fluid.

11. Cooling and heating system according to anyone of claims 1 to 10, **characterised in that** it further comprises a refrigerant fluid circuit (202), arranged in parallel with the evaporator (108) and comprising a third exchanger (206) and/or an aero-evaporator (282).

12. Cooling and heating system according to anyone of claims 1 to 11, **characterised in that** it further comprises a refrigerant fluid circuit (204), arranged in parallel with the condenser (104) and comprising a fourth exchanger (230) and/or an aero-condenser (290).
